(19) Europäisches Patentamt

European Patent Office

Office européen des brevets

(11) **EP 2 557 442 B1**

(12) **EUROPEAN PATENT SPECIFICATION**

(45) Date of publication and mention of the grant of the patent:
**08.10.2014 Bulletin 2014/41**

(51) Int Cl.:
***G02B 6/44*** *(2006.01)*

(21) Application number: **11177343.8**

(22) Date of filing: **12.08.2011**

(54) **Cable closure**

Kabelgehäuse

Fermeture de câble

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**13.02.2013 Bulletin 2013/07**

(73) Proprietor: **CCS Technology, Inc.**
**Wilmington, DE 19803 (US)**

(72) Inventors:
 • **Breuer-Heckel, Mike**
  **44143 Dortmund (DE)**
 • **Osoba, Markus**
  **58300 Wetter (DE)**
 • **Kittler, Lars**
  **58239 Schwerte (DE)**
 • **Badura, Stefan**
  **58708 Menden (DE)**
 • **Figge, Axel**
  **58099 Hagen (DE)**
 • **Thibault, Simon**
  **58099 Hagen (DE)**
 • **Kupczyk, Andreas**
  **58099 Hagen (DE)**
 • **Hoffmann, Wolfgang**
  **58097 Hagen (DE)**

(74) Representative: **Sturm, Christoph**
**Quermann - Sturm - Weilnau**
**Patentanwälte Partnerschaft mbB**
**Unter den Eichen 5**
**65195 Wiesbaden (DE)**

(56) References cited:
**EP-A1- 0 942 303     WO-A1-97/41474**
**WO-A1-99/56370     WO-A2-01/41276**
**US-A- 4 942 270**

# Description

The present patent application relates to a cable closure in accordance with the preamble of claim 1.

Cable closures are used in telecommunication cable networks, e.g. in fiber optic and copper cable networks, for protecting spliced joints at connection points between two telecommunication cables and for protecting branch points or splitting points of telecommunication cables. In this case, the cable closures need to ensure the continuity of the telecommunication cables as though the telecommunication cables had not been interrupted.

The product catalog "Accessories for Fiber Optic Networks", Edition 1, page 75, Corning Cable Systems, 2001 discloses cable closures firstly in the form of inline cable closures and secondly in the form of dome cable closures, which all have a housing which defines an interior of the cable closure and seals off the interior thereof from the outside. Conventionally, assemblies for connecting, namely for splicing, telecommunications conductors guided in telecommunications cables are arranged in the interior defined by the housing of the cable closure.

In the case of cable closures in the form of dome cable closures, the housing is formed by a dome-like covering body and a sealing body, the sealing body defining cable insertion regions, which are sealed off on one side of the dome-like covering body and via which all of the cables can be inserted into the interior of the cable closure.

In the case of cable closures in the form of inline cable closures, cable insertion regions which are sealed off on two opposite sides of the covering body are formed for inserting cables into the interior of the cable closure, with the result that inline cable closures can be installed in one line with the cables.

DE 20 2010 006 582 U1 discloses an inline cable closure, having a housing, which delimits an interior of the cable closure and seals off the cable closure toward the outside, the housing comprising a covering body, the covering body comprises shells and provides on mutually opposite sides of the same cable insertion regions for inserting cables into the interior of the cable closure and/or for passing cables out of the interior of the cable closure. According to the prior art DE 20 2010 006 582 U1 deformable sealing elements are positioned at the mutually opposite sides of the covering body in the area of the cable insertion regions of the shells, wherein each of the sealing elements is positioned between barrier walls of the respective shell, namely between a barrier wall facing the interior of the cable closure and a barrier wall remote from the interior of the cable closure.

EP 1 970 737 A1 discloses a sealing body of a dome cable closure. This sealing body comprises sealing body segments with gel-like sealing elements having conically shaped recesses.

Other cable closures according to the prior art are known from WO 97/41474 A1 and from EP 0 942 303 A1.

Against this background, the present patent application provides a novel cable closure as defined by claim 1 having improved sealing properties.

When using sealing elements within the shells of a cable closure not having the recesses according to this application, the sealing material could be pushed radial on a cable to be sealed in the respective cable insertion region so that a so called "Eye-ball effect" can occur. This can cause leakage of the cable closure in axial cable direction.

The present application relates to a cable closure having improved sealing properties. When sealing a cable within a cable insertion region, the material of the sealing elements can be pushed into the recesses thereby avoiding the so called "Eye-ball effect". The defined geometry of the recesses allows the handling and sealing of cables with different cable diameters. The third subsection of the recesses holds a defined sealing pressure on the cable. The cable closure according to the present application has improved sealing properties with respect to all operating conditions, e.g. with respect to pressure conditions above or below atmospheric pressure and with respect to different temperature conditions.

Exemplary embodiments of the invention will be explained in more detail, without any restriction being imposed, with reference to the drawing, in which:

Figure 1    shows a perspective view of a cable closure in form of an inline cable closure in a closed status of the same;

Figure 2    shows a perspective view of the inline cable closure shown in figure 1 in an opened status of the same;

Figure 3    shows a first, lower shell of a preferred embodiment of an inline cable closure according to the invention;

Figure 4    shows a detail of Figure 3;

Figure 5    shows an alternative first, lower shell of a preferred embodiment of an inline cable closure according to the invention;

Figure 6    shows a detail of Figure 5;

Figure 7    shows another alternative first, lower shell of a preferred embodiment of an inline cable closure according to the invention;

Figure 8    shows a detail of Figure 7;

Figure 9    shows a second, upper shell of a preferred embodiment of an inline cable closure according to the invention;

Figure 10   a detail of a recess formed in a sealing element of a closure.

The present invention relates to a cable closure 10, which in the preferred exemplary embodiment shown is an inline cable closure, comprising a housing which is formed by a covering body 13 composed of two shells 11 and 12.

In the exemplary embodiment shown, the shells 11 and 12 are half-shells and the first half-shell 11 is a so-called lower shell and the second half-shell 12 is a so-called upper shell of the covering body 13, which together define an interior 14 of the inline cable closure 10.

Cable insertion regions 17 are formed on mutually opposite sides 15 and 16 of the inline cable closure 10 or the covering body 13, with it being possible for cables to be inserted into the interior 14 of the inline cable closure 10 or passed out of the interior. In the exemplary embodiment shown, in each case two cable insertion regions 17 for inserting in each case one cable into the interior 14 of the inline cable closure 10 are formed on both mutually opposite sides 15 and 16 of the covering body 13.

In the shown embodiment, the two half-shells 11 and 12 are hinged together at first longitudinal sides 18, 19 of the same. The half-shells 11 and 12 can be pivoted with respect to each other around a hinge 20 by which the two half-shells 11 and 12 are fixed to each other at the first longitudinal sides 18, 19 of the same.

When the inline cable closure 10 is closed, the other second longitudinal sides 21, 22 of the two half-shells 11 and 12 can be secured to each other by a closing mechanism 23, which is in the shown embodiment assigned to the lower half-shell 11.

In order to ensure that the cables to be inserted into the interior 14 of the inline cable closure 10 via the cable insertion regions 17 are sealed off, deformable sealing elements 24, which are preferably arranged between barrier walls 25 and 26, are positioned in the area or region of both mutually opposite sides 15 and 16 of the covering body 13 of the inline cable closure 10 on which the cable insertion regions 17 are formed, both in the region of the lower half-shell 11 and in the region of the upper half-shell 12.

A first barrier wall 25 is in each case, namely on both mutually opposite sides 15 and 16 in the region of the lower half-shell 11 and in the region of the upper half-shell 12, remote from the interior 14 of the inline cable closure 10 while a second barrier walls 26 is in each case facing the interior 14 of the cable closure 10.

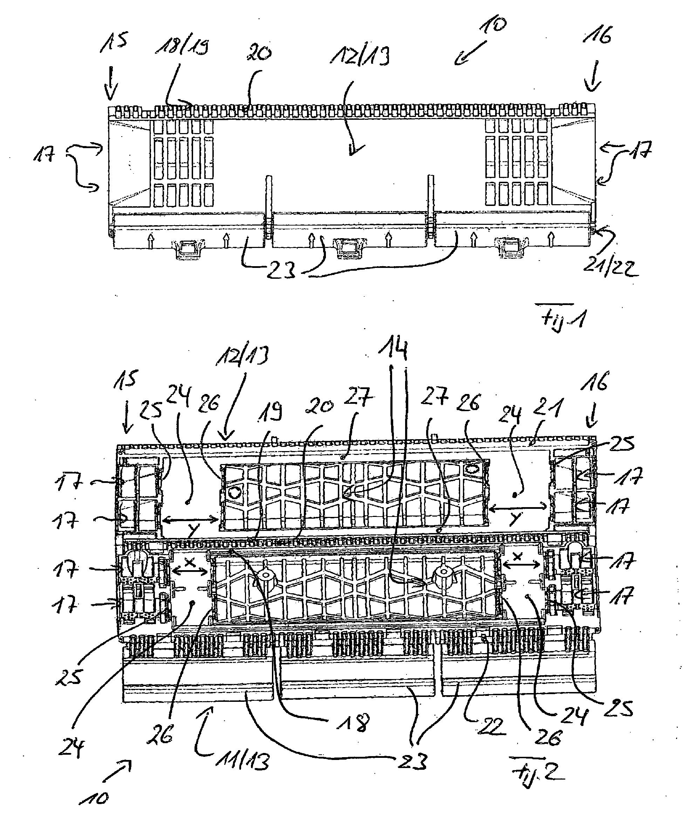

As shown in Figure 2, the sealing elements 24 of the upper half-shell 12, which are associated with the cable insertion regions 17, are coupled via deformable sealing elements 27, which run parallel to longitudinal sides 18, 22 of the upper half-shell 12. As a result, an annular, closed sealing region is formed by the sealing elements 24 and 27 in the region of the upper half-shell 12. Possibly, an analogous annular sealing region can also be formed in the region of the lower half-shell 11.

The deformable sealing elements 24 and possibly 27 are preferably gel-like sealing elements, for example polyurethane gels or silicone gels. Such gel-like sealing elements are deformable and can be compressible or un compressible.

It is also possible to use sealing elements 24 which are partially composed of different materials, for example from a deformable, gel-like sealing material and from a foam-like compressible sealing material.

Each of the barrier walls 25 and 26, namely both the barrier walls 25 remote from the interior 14 and the barrier walls 26 facing the interior 14, extends transversely with respect to an insertion direction of the cable insertion regions 17.

As can be seen in Figure 2, in the region of each of the mutually opposite sides 15, 16 of a first one of the half-shells 11, 12 of the covering body 13, namely in the region of the lower half-shells 11, the distance x between the respective barrier wall 26 facing the interior 14 of the cable closure and the respective barrier wall 25 remote from the interior 14 of the cable closure 10 is smaller than the respective distance y between the barrier walls 25, 26 in the region of each of the mutually opposite sides 15, 16 of a second one of the half-shells 11, 12 of the covering body 13, namely in the region of the upper half-shells 12.

When the covering body 13 of the housing is closed by bringing the half-shells 11 and 12 in the position shown in Figure 1, edges of the barrier walls 25 and 26 of the first, lower half-shell 11 extending transversely with respect to the insertion direction of the cable insertion regions 17 contact, namely deform, the respective compressible and/or deformable sealing element 24 positioned between of the barrier walls 25, 26 of the second, upper half-shell 12.

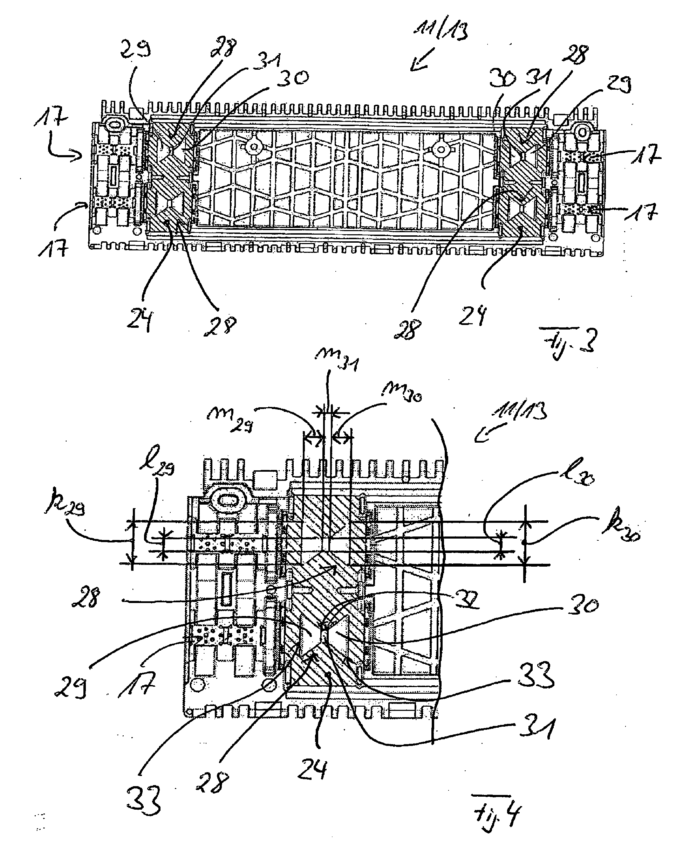

The sealing elements 24 (see e.g. Figure 3) of at least one of the half-shells 11, 12 comprise recesses 28 in the area of the cable insertion regions 17, each recess 28 having at least three subsections, namely a first subsection 29, a second subsection 30 and a third subsection 31.

The first subsection 29 of each recess 28 is in each case remote from the interior 14 of the inline cable closure 10 while the second subsection 30 is in each case facing the interior 14 of the inline cable closure 10.

The first subsection 29 of each recess 28 and the second subsection 30 of each recess 28 have both a generally narrowing cross section in such a way that a tapered end 32 of the first subsection 29 is facing a tapered end 32 of the second subsection 30. The first subsection 29 and the second subsection 30 are preferably both conically shaped.

The third subsection 31 of each recess 28 extends between the tapered end 32 of the first subsection 29 and the tapered end 32 of the second subsection 30. The third subsection 31 is preferably cylindrically shaped.

Figures 3 and 4 show details of recesses 28 formed in the sealing elements 24 of the lower half-shell 11, whereby the recesses 28 shown in Figures 3 and 4 are symmetrically shaped in such a way that the first subsection 29 and the second subsection 30 of the recesses 28 have almost identical shapes and dimensions in radial direction and axial direction of the respective cable insertion region 17.

As shown in Figure 4, the radial diameter $l_{29}$ of the tapered end 32 of the first subsection 29 corresponds to the radial diameter $l_{30}$ of the tapered end 32 of the second subsection 30. In addition, the radial diameter $k_{29}$ of the widened end 33 of the first subsection 29 corresponds to the radial diameter $k_{30}$ of the widened end 33 of the second subsection 30. Further on, the axial length $m_{29}$ of the first subsection 29 corresponds to the axial length $m_{30}$ of the second subsection 30.

The third subsection 31 of the recesses 28 shown in Figures 3 and 4 has a radial diameter corresponding to the radial diameters $l_{29}$ and $l_{30}$ of the tapered ends 32 of the first subsection 29 and the second subsection 30. The axial lengths $m_{31}$ of the third subsection 31 is smaller than the axial length $m_{29}$ of the first subsection 29 and the axial length $m_{30}$ of the second subsection 30.

In case of the recesses 28 shown in Figures 3 and 4 the axial and radial dimension of the subsections 29, 30 and 31 are preferably characterized by the following ratios:

$$1/4 < l_{29}/k_{29} = l_{30}/k_{30} < 1/2$$

$$1/5 < m_{31}/m_{29} = m_{31}/m_{30} < 1$$

$$2/3 < m_{29}/(k_{29} - l_{29}) = m_{30}/(k_{30} - l_{30}) < 1$$

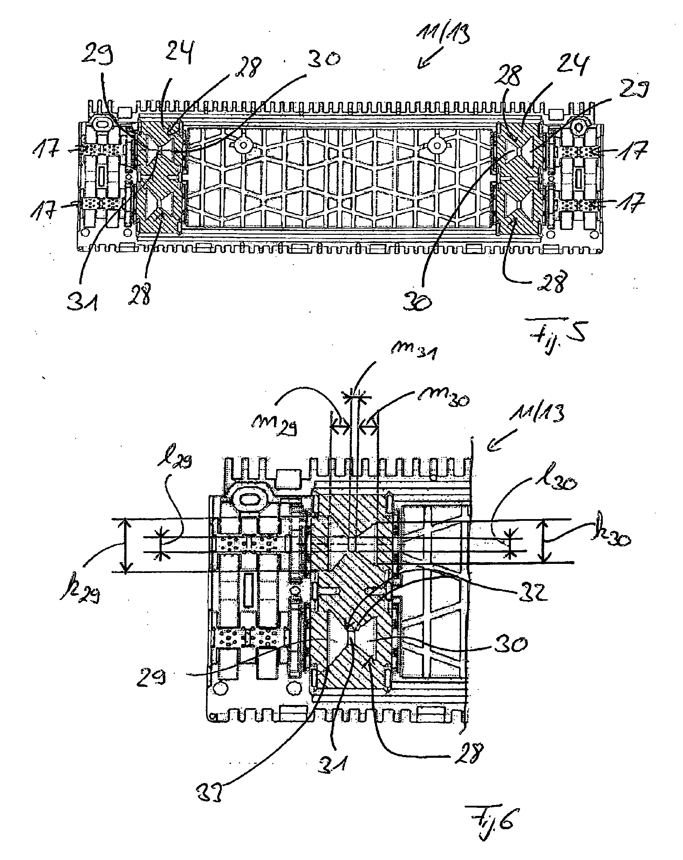

Figures 5 and 6 show details of alternative recesses 28 formed in the sealing elements 24 of the lower half-shell 11, whereby the recesses 28 shown in Figures 5 and 6 are asymmetrically shaped in such a way that the first subsection 29 and the second subsection 30 of the recesses 28 have different dimensions in radial direction of the respective cable insertion region 17.

As shown in Figure 6, the radial diameter $l_{29}$ of the tapered end 32 of the first subsection 29 corresponds to the radial diameter $l_{30}$ of the tapered end 32 of the second subsection 30. However, the radial diameter $k_{29}$ of the widened end 33 of the first subsection 29 is larger than to the radial diameter $k_{30}$ of the widened end 33 of the second subsection 30.

The axial length $m_{29}$ of the first subsection 29 corresponds to the axial length $m_{30}$ of the second subsection 30.

The third subsection 31 of the recesses 28 shown in Figures 5 and 6 has a radial diameter corresponding to the radial diameters $l_{29}$ and $l_{30}$ of the tapered ends 32 of the first subsection 29 and the second subsection 30. The axial lengths $m_{31}$ of the third subsection 31 is smaller than the axial length $m_{29}$ of the first subsection 29 and the axial length $m_{30}$ of the second subsection 30.

In case of the recesses 28 shown in Figures 5 and 6 the axial and radial dimension of the subsections 29, 30 and 31 are preferably characterized by the following ratios:

$$1/4 < l_{29}/k_{29} < 1/2$$

$$1/4 < l_{30}/k_{30} < 1/2$$

$$1 < k_{29}/k_{30} < 3/2$$

$$1/5 < m_{31}/m_{29} = m_{31}/m_{30} < 1$$

$$1/3 < m_{29}/(k_{29} - l_{29}) < 1$$

$$2/3 < m_{30}/(k_{30} - l_{30}) < 1$$

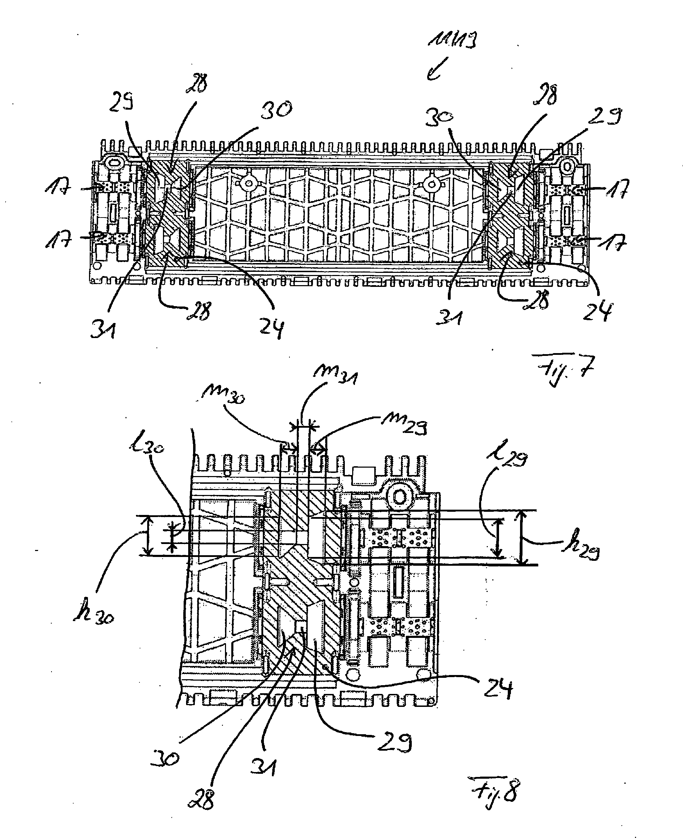

Figures 7 and 8 show details of further alternative recesses 28 formed in the sealing elements 24 of the lower half-shell 11, whereby the recesses 28 shown in Figures 7 and 8 are again asymmetrically shaped in such a way that the first subsection 29 and the second subsection 30 of the recesses 28 have different dimensions in radial direction of the respective cable insertion region 17.

As shown in Figure 8, the radial diameter $l_{29}$ of the tapered end 32 of the first subsection 29 is larger than the radial diameter $l_{30}$ of the tapered end 32 of the second subsection 30. Further on, the radial diameter $k_{29}$ of the widened end 33 of the first subsection 29 is larger than to the radial diameter $k_{30}$ of the widened end 33 of the second subsection 30. In the embodiment of Figure 8, the radial diameter $l_{29}$ of the tapered end 32 of the first subsection 29 corresponds to the radial diameter $k_{30}$ of the widened end 33 of the second subsection 30. The axial length $m_{29}$ of the first subsection 29 shown in Figures 7 and 8 corresponds to the axial length $m_{30}$ of the second subsection 30.

The third subsection 31 of the recesses 38 shown in Figures 7 and 8 has a radial diameter corresponding to the radial diameter $l_{30}$ of the tapered end 32 of the second subsection 30. However, this radial diameter of the third subsection 31 is smaller than the radial diameter $l_{29}$ of the tapered end 32 of the first subsection 29 so that a step-like or graduated transition is provided between the third subsection 33 and the first subsection 29 of the recesses 28.

The axial lengths $m_{31}$ of the third subsection 31 is smaller than the axial length $m_{29}$ of the first subsection 29 and the axial length $m_{30}$ of the second subsection 30.

In case of the recesses 28 shown in Figures 7 and 8 the axial and radial dimension of the subsections 29, 30 and 31 are preferably characterized by the following ratios:

$$1/3 < l_{29}/k_{29} < 1$$

$$1/4 < l_{30}/k_{30} < 1/2$$

$$1 < k_{29}/k_{30} < 3/2$$

$$1 < l_{29}/l_{30} < 3$$

$$1/5 < m_{31}/m_{29} = m_{31}/m_{30} < 1$$

$$1/3 < m_{29}/(k_{29} - l_{29}) < 3$$

$$1/3 < m_{30}/(k_{30} - l_{30}) < 5/4$$

In the embodiments shown in Figures 3 to 8, all recesses 28 are symmetrically shaped in axial direction in such a way that the first subsection 29 and the second subsection 30 of each recess 28 have almost identical dimensions in axial direction of the respective cable insertion region 17. The recesses 28 of the embodiment shown in Figures 3 and 4 are in addition symmetrically shaped in radial direction in such a way that the first subsection 29 and the second subsection 30 of each recess 28 have almost identical dimensions in radial direction of the respective cable insertion region 17.

The recesses 28 of the embodiment shown in Figures 5 and 6 and of the embodiment shown in Figures 7 and 8 are in contrary asymmetrically shaped in radial direction of the respective cable insertion region 17 in such a way that the first subsection 29 and the second subsection 30 of each recess 29 have different dimensions in radial direction of the respective cable insertion region 17.

Further on, it is possible that the recesses 28 are asymmetrically shaped in axial direction in such a way that the first subsection 29 and the second subsection 30 of each recess 28 have different lengths $m_{29}$ and $m_{30}$ in axial direction of the respective cable insertion region 17.

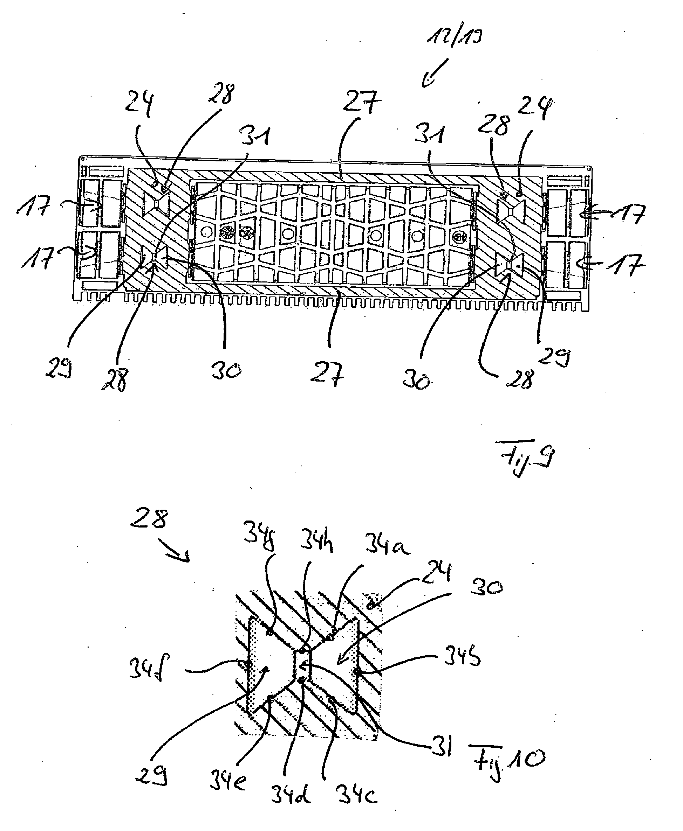

Figure 9 shows details of recesses 28 formed in the sealing elements 24 of the upper half-shell 12, whereby the recesses 28 shown in Figure 9 correspond to recesses 28 shown in Figures 3 and 4.

As shown in Figure 10, each recess 28 has walls 34a to 34h formed in the respective sealing element 24, whereby said walls 34a to 34h define an enclosed recess 28.

The walls 34a to 34h formed in the sealing elements 24 provide a continuous surface surrounding the respective recess 28. Each recess 28 is surrounded by one continuous surface of the respective sealing element 24, whereby the continuous surface is defined by the walls 34a to 34h.

Preferably, the sealing elements 24 of both half-shells 11, 12 comprise the recesses 28 in the area of the cable insertion regions 17. In this case, the recesses 28 formed in the sealing elements 24 of a first half-shell 11 and the recesses 28 formed in the sealing elements 24 of a second half-shell 12 have almost identical shapes and dimensions. In this case, the half-shell 11 of Figures 3 and 4 is used in combination with the half-shell 12 of Figure 9.

According to the invention the recesses 28 formed in the sealing elements 24 of the first half-shell 11 and the recesses 28 formed in the sealing elements 24 of a second half-shell 12 have different shapes and dimensions. In this case, the half-shell 11 of Figures 5 and 6 or the half-shell 11 of Figures 7 and 8 can be used in combination with the half-shell 12 of Figure 9.

When the covering body 13 of the housing is closed by bringing the half-shells 11 and 12 each having recesses 28 with almost identical shapes and dimensions in the position shown in Figure 1, the recesses 28 of the half-shells 11 and 12 are aligned in such a way that there is no axial and radial offset between the same. In this case, the walls 34a to 34h of such aligned recesses 28 of joined half-shells 11, 12 define an enclosed chamber when the half-shells 11, 12 are joined and the sealing elements 24 of the half-shells 11, 12 are in contact with each other.

List of reference numerals

| | | | |
|---|---|---|---|
| 10 | inline cable closure | 34f | wall |
| 11 | shell/lower half-shell | 34g | wall |
| 12 | shell/upper half-shell | 34h | wall |
| 13 | covering body | | |
| 14 | interior | | |
| 15 | side | | |
| 16 | side | | |
| 17 | cable insertion region | | |
| 18 | longitudinal side | | |
| 19 | longitudinal side | | |
| 20 | hinge | | |
| 21 | longitudinal side | | |
| 22 | longitudinal side | | |
| 23 | closing mechanism | | |
| 24 | sealing element | | |
| 25 | barrier wall | | |
| 26 | barrier wall | | |
| 27 | sealing element | | |
| 28 | recess | | |
| 29 | first subsection | | |
| 30 | second subsection | | |
| 31 | third subsection | | |
| 32 | tapered end | | |

(continued)

| | |
|---|---|
| 33 | widened end |
| 34a | wall |
| 34b | wall |
| 34c | wall |
| 34d | wall |
| 34e | wall |

## Claims

1. A cable closure, having a housing which delimits an interior of the cable closure and seals off the cable closure toward the outside, the housing comprising a covering body (13), the covering body (13) comprises shells (11, 12) and provides on mutually opposite sides (15, 16) of the same cable insertion regions (17) for inserting cables into the interior of the cable closure and/or for passing cables out of the interior of the cable closure, wherein deformable sealing elements (24) are positioned at the mutually opposite sides (15, 16) of the covering body (13) in the area of the cable insertion regions (17) of the shells (11, 12), wherein the sealing elements (24) of both shells (11, 12) comprise recesses (28) in the area of the cable insertion regions (17), and wherein each recess (28) has at least three subsections, namely a first subsection (29) and a second subsection (30) both having a generally narrowing cross section in such a way that a tapered end (32) of the first subsection (29) is facing a tapered end (32) of the second subsection (30), and a third subsection (31) extending between the tapered end (32) of the first subsection (29) and the tapered end (32) of the second subsection (30), **characterized in that** the recesses (28) formed in the sealing elements (24) of a first shell (11) and the recesses (28) formed in the sealing elements (24) of a second shell (12) have different shapes and/or dimensions.

2. The cable closure as claimed in claim 1, **characterized in that** the first subsection (29) and the second subsection (30) are both conically shaped and/or that the third subsection (31) is cylindrically shaped.

3. The cable closure as claimed in claim 1 or 2, **characterized in that** the recesses (28) are symmetrically shaped in such a way that the first subsection (29) and the second subsection (30) of each recess (28) have almost identical shapes and dimensions in radial direction and axial direction of the respective cable insertion region (17).

4. The cable closure as claimed in claim 1 or 2, **characterized in that** the recesses (28) are asymmetrically shaped in such a way that the first subsection (29) and the second subsection (30) of each recess (28) have different shapes and/or dimensions in radial direction and/or axial direction of the respective cable insertion region (17).

5. The cable closure as claimed in one of claims 1 to 4, **characterized in that** a radial dimension of the third subsection (31) corresponds to a radial dimension of the tapered end (32) of the first subsection (29) and/or to a radial dimension of the tapered end (32) of the second subsection (30).

6. The cable closure as claimed in one of claims 1 to 5, **characterized in that** the deformable sealing elements (24) of the second shell (12) are coupled to one another via deformable sealing elements (27) which run along longitudinal sides of the second shell (12) so as to form an annular sealing region.

7. The cable closure as claimed in one of claims 1 to 6, **characterized in that** wherein each of the sealing elements (24) is positioned between barrier walls (25, 26) of the respective shell (11, 12), namely between a barrier wall (26) facing the interior (14) of the cable closure and a barrier wall (25) remote from the interior (14) of the cable closure.

8. The cable closure as claimed in one of claims 1 to 7, **characterized in that** the deformable sealing elements (24) are gel-like sealing elements.

## Patentansprüche

1. Kabelmuffe mit einer Umhüllung, die einen Innenraum der Kabelmuffe abgrenzt und die Kabelmuffe zum Äußeren hin abdichtet, wobei die Umhüllung einen Ummantelungskörper (13) umfasst, wobei der Ummantelungskörper (13) Schalen (11, 12) umfasst und an sich gegenüberliegenden Seiten (15, 16) desselben Kabeleinführungsbereiche (17) zum Einführen von Kabeln in den Innenraum der Kabelmuffe und/oder zum Herausführen von Kabeln aus dem Innenraum der Kabelmuffe aufweist, wobei an den sich gegenüberliegenden Seiten (15, 16) des Ummantelungskörpers (13) im Bereich der Kabeleinführungsbereiche (17) der Schalen (11, 12) verformbare Dichtungselemente (24) angeordnet sind, wobei die Dichtungselemente (24) beider Schalen (11, 12) im Bereich der Kabeleinführungsbereiche (17) Ausnehmungen (28) umfassen und wobei jede Ausnehmung (28) mindestens drei Unterabschnitte aufweist, nämlich einen ersten Unterabschnitt (29) und einen zweiten Unterabschnitt (30), die jeweils einen sich allgemein verengenden Querschnitt derart aufweisen, dass ein verjüngtes Ende (32) des ersten Unterabschnitts (29) einem verjüngten Ende (32) des zweiten Unterabschnitts (30) zugewandt ist, sowie einen dritten Unterabschnitt (31), der sich zwischen dem verjüngten Ende (32) des ersten Unterabschnitts (29) und dem verjüngten Ende (32) des zweiten Unterabschnitts (30) erstreckt, **dadurch gekennzeichnet, dass** die in den Dichtungselementen (24) einer ersten Schale (11) ausgebildeten Ausnehmungen (28) und die in den Dichtungselementen (24) einer zweiten Schale (12) ausgebildeten Ausnehmungen (28) verschiedene Formen und/oder Abmessungen aufweisen.

2. Kabelmuffe nach Anspruch 1, **dadurch gekennzeichnet, dass** der erste Unterabschnitt (29) und der zweite Unterabschnitt (30) beide kegelförmig sind und/oder dass der dritte Unterabschnitt (31) zylinderförmig ist.

3. Kabelmuffe nach Anspruch 1 oder 2, **dadurch gekennzeichnet, dass** die Ausnehmungen (28) symmetrisch geformt sind, so dass der erste Unterabschnitt (29) und der zweite Unterabschnitt (30) jeder Ausnehmung (28) fast identische Formen und Abmessungen in Radialrichtung und Axialrichtung des jeweiligen Kabeleinführungsbereichs (17) aufweisen.

4. Kabelmuffe nach Anspruch 1 oder 2, **dadurch gekennzeichnet, dass** die Ausnehmungen (28) asymmetrisch geformt sind, so dass der erste Unterabschnitt (29) und der zweite Unterabschnitt (30) jeder Ausnehmung (28) verschiedene Formen und/oder Abmessungen in Radialrichtung und/oder Axialrichtung des jeweiligen Kabeleinführungsbereichs (17) aufweisen.

5. Kabelmuffe nach einem der Ansprüche 1 bis 4, **dadurch gekennzeichnet, dass** eine Radialabmessung des dritten Unterabschnitts (31) einer Radialabmessung des verjüngten Endes (32) des ersten Unterabschnitts (29) und/oder einer Radialabmessung des verjüngten Endes (32) des zweiten Unterabschnitts (30) entspricht.

6. Kabelmuffe nach einem der Ansprüche 1 bis 5, **dadurch gekennzeichnet, dass** die verformbaren Dichtungselemente (24) der zweiten Schale (12) mittels verformbarer Dichtungselemente (27) miteinander gekoppelt sind, die derart entlang von Längsseiten der zweiten Schale (12) verlaufen, dass ein ringförmiger Dichtungsbereich gebildet ist.

7. Kabelmuffe nach einem der Ansprüche 1 bis 6, **dadurch gekennzeichnet, dass** jedes der Dichtungselemente (24) zwischen Sperrwänden (25, 26) der entsprechenden Schale (11, 12) angeordnet ist, nämlich zwischen einer Sperrwand (26), die dem Innenraum (14) der Kabelmuffe zugewandt ist, und einer Sperrwand (25), die vom Innenraum (14) der Kabelmuffe abgewandt ist.

8. Kabelmuffe nach einem der Ansprüche 1 bis 7, **dadurch gekennzeichnet, dass** die verformbaren Dichtungselemente (24) gelartige Dichtungselemente sind.

## Revendications

1. Fermeture de câble ayant un boîtier qui délimite un intérieur de la fermeture de câble et scelle la fermeture de câble par rapport à l'extérieur, le boîtier comprenant un corps de recouvrement (13), le corps de recouvrement (13) comprenant des coques (11, 12) et disposant, sur des côtés mutuellement opposés (15, 16) de celui-ci, des régions d'insertion de câbles (17) pour insérer des câbles à l'intérieur de la fermeture de câble et/ou pour faire passer des câbles hors de l'intérieur de la fermeture de câble, des éléments d'étanchéité déformables (24) étant positionnés au niveau des côtés mutuellement opposés (15, 16) du corps de recouvrement (13), dans la zone des régions d'insertion de câbles (17) des coques (11, 12), les éléments d'étanchéité (24) des deux coques (11, 12) comprenant des retraits (28), dans la zone des régions d'insertion de câbles (17), et chaque retrait (28) ayant au moins trois sous-sections, à savoir une première sous-section (29) et une deuxième sous-section (30), toutes deux ayant une section transversale se rétrécissant généralement de telle sorte qu'une extrémité effilée (32) de la première sous-section (29) soit en regard d'une extrémité effilée (32) de la deuxième sous-section (30), et une troisième sous-section (31) s'étendant entre l'extrémité effilée (32) de la première sous-section (29) et l'extrémité effilée (32) de la deuxième sous-section (30) cractérisée en ce que les retraits (28) formés dans les éléments d'étanchéité (24) d'une première coque (11) et les retraits (28) formés dans les éléments d'étanchéité (24) d'une deuxième coque (12) ont des formes et/ou dimensions différentes.

2. Fermeture de câble selon la revendication 1, **caractérisée en ce que** la première sous-section (29) et la deuxième sous-section (30) sont toutes les deux de forme conique et/ou que la troisième sous-section (31) est de forme cylindrique.

3. Fermeture de câble selon la revendication 1 ou 2, **caractérisée en ce que** les retraits (28) ont une forme symétrique de telle sorte que la première sous-section (29) et la deuxième sous-section (30) de chaque retrait (28) aient des formes et des dimensions presque identiques dans la direction radiale et la direction axiale de la région d'insertion de câble respective (17).

**4.** Fermeture de câble selon la revendication 1 ou 2, **caractérisée en ce que** les retraits (28) ont une forme asymétrique de telle sorte que la première sous-section (29) et la deuxième sous-section (30) de chaque retrait (28) aient des formes et/ou des dimensions différentes dans la direction radiale et/ou la direction axiale de la région d'insertion de câble respective (17).

**5.** Fermeture de câble selon l'une quelconque des revendications 1 à 4, **caractérisée en ce qu'**une dimension radiale de la troisième sous-section (31) correspond à une dimension radiale de l'extrémité effilée (32) de la première sous-section (29) et/ou à une dimension radiale de l'extrémité effilée (32) de la deuxième sous-section (30).

**6.** Fermeture de câble selon l'une quelconque des revendications 1 à 5, **caractérisée en ce que** les éléments d'étanchéité déformables (24) de la deuxième coque (12) sont accouplés les uns aux autres par le biais d'éléments d'étanchéité déformables (27) qui s'étendent le long de côtés longitudinaux de la deuxième coque (12) de manière à former une région d'étanchéité annulaire.

**7.** Fermeture de câble selon l'une quelconque des revendications 1 à 6, **caractérisée en ce que** chacun des éléments d'étanchéité (24) est positionné entre des parois formant barrière (25, 26) de la coque respective (11, 12), à savoir entre une paroi formant barrière (26) en regard de l'intérieur (14) de la fermeture de câble et une paroi formant barrière (25) éloignée de l'intérieur (14) de la fermeture de câble.

**8.** Fermeture de câble selon l'une quelconque des revendications 1 à 7, **caractérisée en ce que** les éléments d'étanchéité déformables (24) sont des éléments d'étanchéité de type gel.

Fig. 1

Fig. 2

Fig. 3

Fig. 4

Fig. 5

Fig. 6

Fig. 7

Fig. 8

Fig. 9

Fig. 10

13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 202010006582 U1
- EP 1970737 A1
- WO 9741474 A1
- EP 0942303 A1

**Non-patent literature cited in the description**

- Accessories for Fiber Optic Networks. Corning Cable Systems. 2001, 75